# EUROPÄISCHE PATENTSCHRIFT

(11) **EP 1 393 035 B1**
(45) Veröffentlichungstag und Bekanntmachung des Hinweises auf die Patenterteilung: **24.07.2013**
(21) Anmeldenummer: 02745313.3
(22) Anmeldetag: 24.05.2002
(51) Int. Cl.: G01L 3/10, B62D 5/04

(54) **VERFAHREN ZUR BEFESTIGUNG EINER DREHMOMENT-MESSEINRICHTUNG**
METHOD FOR ATTACHING A TORQUE MEASURING DEVICE
PROCEDE POUR FIXER UN DISPOSITIF DE MESURE DE COUPLE DE ROTATION

(30) Priorität: 01.06.2001 DE 10126791
(43) Veröffentlichungstag der Anmeldung: 03.03.2004
(73) Patentinhaber: ZF Lenksysteme GmbH, 73527 Schwäbisch Gmünd (DE)
(72) Erfinder: ABELE, Wolfgang, 73565 Spraitbach (DE); FAHRIAN, Matthias, 73566 Bartholomä (DE); RUF, Gerhard, 73460 Hüttlingen (DE); FRÖHLICH, Stefan, 73568 Zimmerbach (DE); HABBEL, Werner, 79114 Freiburg (DE); WEESE, Thomas, 73557 Mutlangen (DE); WETTEMANN, Anton, 73527 Schwäbisch Gmünd (DE); ZILLER, Christoph, 73550 Waldstetten (DE)
(86) Internationale Anmeldenummer: PCT/EP2002/005686
(87) Internationale Veröffentlichungsnummer: WO 2002/099374

(56) Entgegenhaltungen:
- US-A- 5 040 631
- US-A- 6 000 491
- PATENT ABSTRACTS OF JAPAN vol. 1997, no. 01, 31. Januar 1997 (1997-01-31) & JP 08 240493 A (DAIDO STEEL CO LTD;KOYO SEIKO CO LTD), 17. September 1996 (1996-09-17)

## Beschreibung

Die Erfindung betrifft ein Verfahren zur Befestigung einer Drehmoment-Meßeinrichtung zur Erfassung eines Relativmomentes zwischen einer Eingangswelle und einer Ausgangswelle. Die Erfindung betrifft auch eine Eingangswelle und/oder Ausgangswelle zur Ausführung des Verfahrens.

Bei Lenksystemen, insbesondere bei Hilfskraftlenkungen, bei denen die Handlenkung durch einen Elektromotor unterstützt wird, ist ein exaktes, zuverlässiges und dauerhaftes Erfassen eines Relativmomentes zwischen einer Eingangswelle und einer Ausgangswelle zur Erfassung des Lenkwunsches von besonderer Bedeutung. Die zur Erfassung eingesetzte Drehmoment-Meßeinrichtung ist dabei im allgemeinen zwischen einer Eingangswelle, die mit einem Lenkspindelanschluß verbunden ist, und einer Ausgangswelle, die mit einem Ritzel verbunden ist, eingebaut. Die Drehmoment-Meßeinrichtung erfaßt somit das Relativmoment zwischen Meßeinrichtung erfaßt somit das Relativmoment zwischen dem Lenkspindelanschluß bzw. der Eingangswelle und dem Ritzel bzw. der Ausgangswelle und steuert über einen Elektronik-Baustein den Antrieb eines Elektromotors. Der Elektromotor kann dabei zur Servounterstützung der herkömmlichen Lenkvorrichtung dienen.

Zum Funktionsprinzip einer Zahnstangen-Hilfskraftlenkung wird hierbei auf die EP 0 366 691 B1 verwiesen.

Ein aus der Praxis bekanntes Verfahren zur Befestigung einer Drehmoment-Meßeinrichtung an einer Eingangswelle und einer Ausgangswelle eines Lenksystemes sieht dabei vor, daß die Drehmoment-Meßeinrichtung mit der Eingangswelle und der Ausgangswelle verschweißt wird. Dabei hat sich jedoch herausgestellt, daß diese Schweißverbindung aufwendig und nicht ausreichend zuverlässig ist. Zu einem Bruch der Schweißnaht kann es beispielsweise kommen, wenn das falsche Material verschweißt wird. Da es sich bei der Drehmoment-Meßeinrichtung um ein sicherheitsrelevantes Element handelt, das hochpräzise und zuverlässig arbeiten soll, sind an das Verfahren zur Befestigung besonders hohe Ansprüche zu stellen und Fehlermöglichkeiten weitgehendst auszuschalten.

In der US-A-6 000 491 wird zur Ermittlung eines Drehmoments in einer elektrischen Servolenkung eine Anordnung vorgeschlagen, bei der mittels eines Schiebers, der in Wirkverbindung mit einer Eingangs- und einer Ausgangswelle steht, ein relativer Drehwinkel zwischen den beiden Wellenabschnitten erfasst wird, indem der 4.

Drehwinkel in eine translatorische Bewegungskomponente des Schiebers umgewandelt und diese auf Grundlage eines induktiven Messprinzips erfasst wird.

Der vorliegenden Erfindung liegt die Aufgabe zugrunde, die Nachteile des Standes der Technik zu lösen, insbesondere ein Verfahren der eingangs erwähnten Art zu schaffen, das ein präzises, zuverlässiges, dauerhaftes Befestigen einer Drehmoment-Meßeinrichtung zwischen einer Eingangswelle und einer Ausgangswelle eines Lenksystemes ermöglicht, das günstig und einfach durchführbar ist und das Fehlerquellen, die zu einer 4.

Lösung der Verbindung führen können, weitgehend ausschließt.

Diese Aufgabe wird erfindungsgemäß durch den kennzeichnenden Teil von Anspruch 1 gelöst.

Dadurch, daß die Drehmoment-Meßeinrichtung durch Verformelemente lokal in die Eingangswelle und/oder die Ausgangswelle eingeformt wird, entsteht eine zuverlässige, dauerhafte und exakte Verbindung, die ein versehentliches Ablösen der Drehmoment-Meßeinrichtung beispielsweise durch die Auswahl des falschen Materials nahezu ausschließt. Das Verfahren läßt sich außerdem einfach, schnell und kostengünstig durchführen. Von Vorteil ist es dabei außerdem, wie sich in Versuchen gezeigt hat, daß die Verbindung korrosionsfest, schwingfest, temperaturbeständig und beständig gegenüber physikalischen Einflüssen ist.

Die nach dem erfindungsgemäßen Verfahren erzeugte Verbindung weist außerdem eine besonders hohe Festigkeit auf. Wie sich ebenfalls in Versuchen gezeigt hat, läßt sich die Drehmoment-Meßeinrichtung an der vorgesehenen Position exakt befestigen.

Von Vorteil ist es dabei, daß auch nicht miteinander verschweißbare Werkstoffe verbindbar sind. Eine von Schweißkriterien bestimmte Auswahl der zu verarbeitenden Werkstoffe kann daher entfallen. Die Befestigung läßt sich verfahrensgemäß auch deshalb besonders kostengünstig durchführen, da runde Teile ohne vorherigen Formschluß miteinander verbunden werden können.

Ein nachteilhaftes Erwärmen der beteiligten Bauteile während des Fügeprozesses bzw. eine Verschmutzung, wie sie bei dem aus dem Stand der Technik bekannten Verfahren häufiger aufgetreten ist, wird durch das erfindungsgemäße Verfahren zuverlässig verhindert. Darüber hinaus kann der Einsatz von weiteren Zusatzverbindungselementen, wie z.B. Stiften, Klammern oder dergleichen, entfallen.

Ein unerwarteter Nebeneffekt der prozeßsicher durchführbaren Befestigung der Drehmoment-Meßeinrichtung an der Eingangswelle bzw. der Ausgangswelle besteht in vorteilhafter Weise darin, daß gegebenenfalls auch ein wiederholtes Verbinden, insbesondere bei gehärteten Wellen und somit eine Wiederverwendung möglich ist.

Wie sich in Versuchen gezeigt hat, läßt sich die Drehmoment-Meßeinrichtung in vorteilhafter Weise spielfrei mit der Eingangswelle bzw. Ausgangswelle verbinden, so daß eine Unterstützung des vorgegebenen Lenkwunsches beispielsweise durch einen Elektromotor exakt und in einfache Weise möglich ist.

Erfindungsgemäß kann ferner vorgesehen sein, daß die Drehmoment-Meßeinrichtung einen Magnetring und einen Sensor aufweist, die durch die Verformelemente in die Eingangswelle bzw. die Ausgangswelle eingeformt werden.

Durch die Ausbildung der Drehmoment-Meßeinrichtung mit einem Magnetring, der an einer Eingangswelle befestigt werden kann und einem Sensor zur Befestigung an einer Ausgangswelle, läßt sich das Relativmoment zwischen der Eingangswelle und der Ausgangswelle in besonders einfacher Weise abgreifen. Aus der ermittelten Winkelverdrehung läßt sich mit Hilfe von anderen Parametern das Drehmoment und daraus die notwendige Unterstützungskraft durch den Elektromotor bestimmen.

Von Vorteil ist es, wenn die Eingangswelle und/oder die Ausgangswelle mit Aufnahmepunkten zur Aufnahme des lokal einzuformenden Materials der Drehmoment-Meßeinrichtung versehen wird und die Aufnahmepunkte als Vertiefungen, Senkungen, Bohrungen oder dergleichen ausgebildet werden.

Durch die Aufnahmepunkte in der Eingangswelle und/oder der Ausgangswelle läßt sich die Drehmoment-Meßeinrichtung bzw. der Magnetring und/oder der Sensor in einfacher Weise an der Eingangswelle bzw. der Ausgangswelle befestigen. Daraus ergibt sich eine formschlüssige Verbindung, die aus einer form- und kraftschlüssigen Fügeoperation erfolgt. Dabei ist es ausreichend, wenn eines der beiden zu verbindenden Teile, in diesem Fall die Eingangswelle und/oder die Ausgangswelle, vor der Fügeoperation die Möglichkeit des späteren Formschlusses aufweist.

Die verfahrensgemäße Befestigung der Drehmoment-Meßeinrichtung läßt sich durch die Aufnahmepunkte besonders kraftsparend, exakt, schnell und dauerhaft durchführen. Die Flexibilität beim Anbringen bzw. Einstellen der Drehmoment-Meßeinrichtung ist dabei in keinster Weise beeinflußt, da die Drehmoment-Meßeinrichtung ohne vorherigen Formschluß ausgebildet ist und so beliebig ausgerichtet bzw. angesetzt werden kann. Erst nach einer entsprechenden Betätigung der Verformelemente, die das Material der Drehmoment-Meßeinrichtung lokal in die Aufnahmepunkte einformt, entsteht die gewünschte dauerhafte und zuverlässige Verbindung zwischen der Drehmoment-Meßeinrichtung und der Eingangs- bzw. Ausgangswelle.

Die zur Verbindung aufzubringende Kraft der Verformelemente wird durch die Aufnahmepunkte wesentlich reduziert, wodurch eine besonders exakte Einhaltung der vorgesehenen Position möglich ist.

In einer Ausgestaltung der Erfindung kann vorgesehen sein, daß die Drehmoment-Meßeinrichtung durch einen Tiefziehprozeß eingeformt wird.

Eine derartige Ausgestaltung hat sich als besonders prozeßsicher und einfach durchzuführen herausgestellt.

Von Vorteil ist es, wenn zur Einformung drei als Verformstempel ausgebildete Verformelemente vorgesehen werden und die Anzahl und die Position der Aufnahmepunkte und der Verformstempel aneinander angepaßt sind.

Wie sich in Versuchen gezeigt hat, ist durch eine Ausgestaltung der Verformelemente mit drei Verformstempeln und entsprechend angepaßten Aufnahmepunkten eine sichere und zuverlässige Befestigung der Drehmoment-Meßeinrichtung möglich, die darüber hinaus schnell und kostengünstig durchführbar ist. Vorteilhaft ist es hierfür, wenn die Aufnahmepunkte in die Welle um je 120° versetzt eingebracht sind.

In einer konstruktiven Ausgestaltung der Verbindung kann vorgesehen sein, daß die Einformung der Drehmoment-Meßeinrichtung durch eine Kraft-Wegüberwachung kontrolliert wird.

Durch eine Kraftüberwachung ist eine besonders prozeßsichere Verbindung möglich, da beispielsweise zu dünne Bleche bzw. Materialfehler aufgrund des geringeren Widerstands erkannt werden. Durch die Wegüberwachung wird darüber hinaus gewährleistet, daß das Blech auch beim Auftreten eines erhöhten Widerstandes in der vorgesehenen Weise in die Aufnahmepunkte eingebracht wird bzw. bei nicht Erreichen der vorgesehenen Wegstrecke das Teil nicht freigegeben wird.

Eine vorteilhafte Eingangswelle und/oder Ausgangswelle zur Ausführung des Verfahrens ergibt sich aus Anspruch 16.

Vorteilhafte Ausgestaltungen und Weiterbildungen der Erfindung ergeben sich aus den weiteren Unteransprüchen und aus dem nachfolgend anhand der Zeichnung prinzipmäßig dargestellten Ausführungsbeispiel.

Es zeigt:
- Fig. 1: einen Schnitt durch eine Drehmoment-Meßeinrichtung, die in eine Eingangswelle und eine Ausgangswelle eines Lenksystems eingeformt ist;
- Fig. 2: eine Ansicht gemäß Pfeilrichtung II der Fig. 1; und
- Fig. 3: eine vergrößerte Darstellung eines an einem Blechring angeordneten Magnetringes, der mit der Eingangswelle verstemmt ist.

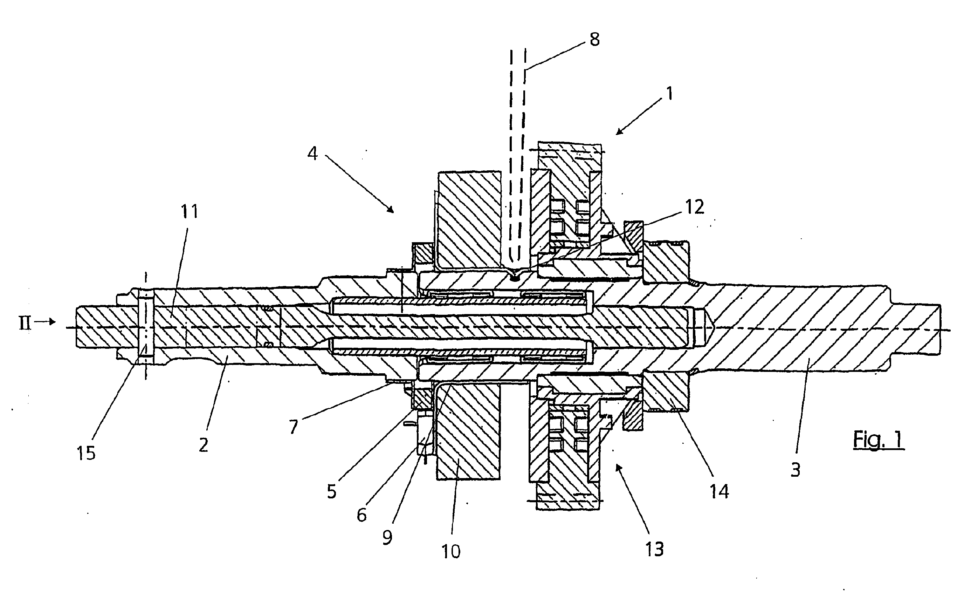

Fig. 1 zeigt einen Teil eines Lenksystems 1, insbesondere einer Zahnstangen-Hilfskraftlenkung, mit im wesentlichen einer Eingangswelle 2, einer Ausgangswelle 3 und einer Drehmoment-Meßeinrichtung 4.

Die Eingangswelle 2 ist dabei in nicht dargestellter Weise über einen Lenkspindelanschluß mit einer Lenkhandhabe zur Übermittlung eines Lenkwunsches verbunden. Die Ausgangswelle 3 bildet in nicht näher dargestellter Weise ein Antriebsritzel, das in üblicher Weise in Eingriff mit einer Zahnstange steht. Die Zahnstange ist in bekannter Weise über ein Lenkgestänge mit lenkbaren Rädern verbunden.

Wie aus Fig. 1 ersichtlich, ist die Drehmoment-Meßeinrichtung 4 sowohl an der Eingangswelle 2 als auch an der Ausgangswelle 3 befestigt bzw. eingebaut. Die Drehmoment-Meßeinrichtung 4 kann somit ein Relativmoment zwischen der Eingangswelle 2 und der Ausgangswelle 3 bzw. zwischen dem Lenkspindelanschluß und dem Antriebsritzel erfassen. Anhand des erfaßten Relativmoments wird über einen nicht dargestellten Elektronik-baustein ein Elektromotor gesteuert.

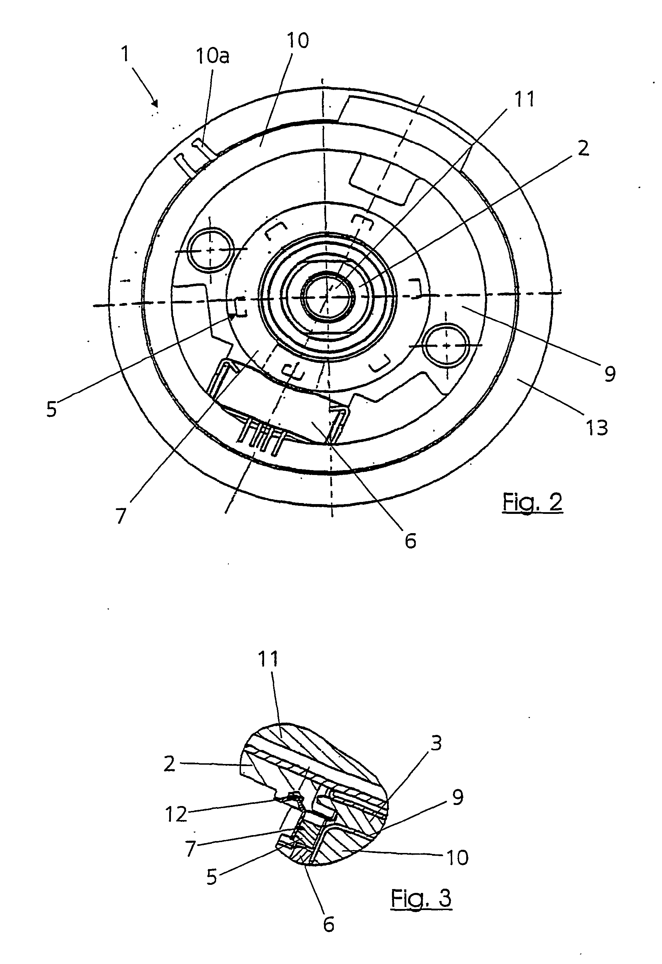

Wie in Fig. 1 erkennbar, weist die Drehmoment-Meßeinrichtung 4 einen Magnetring 5 und einen Sensor 6 auf. In dem dargestellten Ausführungsbeispiel ist der Magnetring 5 an einem zylindrischen Blechring 7 angeordnet, der verfahrensgemäß durch nur prinzipmäßig angedeutete Verformelemente 8 lokal in die Eingangswelle 2 eingeformt ist (siehe Fig. 3). Der Sensor 6 ist analog dazu an einem Halteblech 9 mit Wickelfedern 10 angeordnet und mittels der Verformelemente 8 in die Ausgangswelle 3 eingeformt.

Eine Anordnung des Magnetringes 5 auf der Eingangswelle 2 und des Sensors 6 auf der Ausgangswelle 3 zur Messung des Verdrehwinkels zwischen der Eingangswelle 2 und der Ausgangswelle 3 hat sich als besonders vorteilhaft herausgestellt. Selbstverständlich kann in einer alternativen Ausführungsform auch vorgesehen sein, daß die Anordnung des Magnetringes 5 bzw. des Sensors 6 umgekehrt erfolgt.

Wie bei hydraulischen Lenksystemen üblich, sind die Eingangswelle 2 und die Ausgangswelle 3 mit einem Drehstab 11 verbunden. Über die Drehstabsteifigkeit und den gemessenen Verdrehwinkel kann somit das Moment berechnet werden.

Eine besonders vorteilhafte Anordnung des Sensors 6 mit dem Halteblech 9 zu dem Magnetring 5 mit dem zylindrischen Blechring 7 ergibt sich aus Fig. 2.

Zur vorteilhaften Einformung des Haltebleches 9 in die Ausgangswelle 3 bzw. zur lokalen Einformung des zylindrischen Blechringes 7 in die Eingangswelle 2 sind Aufnahmepunkte 12 in der Ausgangswelle 3 (Fig. 1) bzw. der Eingangswelle 2 (Fig. 3) ersichtlich. Die Aufnahmepunkte können als Vertiefungen, Senkungen oder in vorteilhafter Weise als Bohrungen 12 ausgebildet werden und nehmen in vorteilhafter Weise das lokal einzuformende Material der Drehmoment-Meßeinrichtung 4 auf. Ein versehentliches Verstellen bzw. Verwackeln der vor der Verformung exakt eingestellten bzw. ausgerichteten Drehmoment-Meßeinrichtung 4 wird somit weitgehend reduziert.

Eine besonders vorteilhafte Einformung des zylindrischen Blechringes 7 bzw. des Haltebleches 9 in die Eingangswelle 2 bzw. die Ausgangswelle 3 ist durch den Einsatz von drei Verformelementen, die entsprechend gleichmäßig um die Eingangswelle 2 bzw. die Ausgangswelle 3 angeordnet sind, möglich. Vorteilhaft ist eine Ausgestaltung der Verformelemente als Verformstempel 8. Die Anzahl und die Position der Bohrungen 12 kann dabei in einfacher Weise an die Verformstempel 8 angepaßt werden. Die in dem Ausführungsbeispiel dargestellte Eingangswelle 2 und die Ausgangswelle 3 weisen folglich, in nicht näher dargestellter Weise, jeweils drei Bohrungen 12 auf, die je um 120° versetzt angeordnet sind.

Als vorteilhaft hat es sich herausgestellt, wenn die Bohrungen 12 als zylindrische Bohrungen mit Senkungen ausgestaltet sind. Ein Bohrungsdurchmesser von 1 bis 4 mm, vorzugsweise 2 bis 3 mm, eine Bohrungstiefe von 1 bis 3 mm, vorzugsweise 1,5 bis 2 mm, eine Senkung mit 45° und einer Senkungstiefe vorzugsweise von 0,5 bis 1 mm hat sich in Versuchen als besonders geeignet bezüglich einer schnellen, kostengünstigen, präzisen und dauerhaften Einformung herausgestellt. Die Kante zwischen der Senkung und dem zylindrischen Teil der Bohrung 12 ist, wie sich gezeigt hat, für eine vorteilhafte Spielfreiheit verantwortlich. Ein Großteil der Haltekräfte wird ebenfalls über diese Kante übertragen. Wie sich in Versuchen herausgestellt hat, ist ein 10 %iger Freiraum in der Bohrungstiefe zur Gewährleistung des Materialflusses besonders vorteilhaft.

Bei der Bohrung 12 ist darauf zu achten, daß der Bohrungsansatz nicht scharfkantig ist. Die Senkung ermöglicht in vorteilhafter Weise, daß das in die Bohrung 12 tiefgezogene Material des zylindrischen Blechringes 7 bzw. des Haltebleches 9 nicht abgeschert wird. Die verfahrerisgemäße lokale Einformung des Materials des zylindrischen Blechringes 7 bzw. des Haltebleches 9 kann durch eine Kraft-Wegüberwachung kontrolliert werden. Zur Einformung hat sich ein Tiefziehprozeß als besonders geeignet herausgestellt.

Fig. 3 zeigt eine vorteilhafte Befestigung des Magnetringes 5 an der Eingangswelle 2 bzw. des Sensors 6 an der Ausgangswelle 3, die mit dem erfindungsgemäßen Verfahren erzeugt wurde.

Das in Fig. 1 und Fig. 2 dargestellte Teil eines Lenksystemes 1 weist neben den bereits beschriebenen Bestandteilen in herkömmlicher Weise eine Schnecke 13, ein Lager 14 und einen Verbindungsstift 15, der den Drehstab 11 mit der Eingangswelle 2 verbindet, auf.

Die Funktionsweise der Schnecke 13 und des Lagers 14 sind hinlänglich bekannt und spielen für das erfindungsgemäße Verfahren keine Rolle, so daß auf eine nähere Beschreibung verzichtet wird.

Der Einsatz einer Wickelfeder 10 ist prinzipiell bereits aus der Airbag-Technik bekannt, weshalb auf eine nähere Beschreibung ebenfalls verzichtet wird. Die Wickelfeder 10 kann mit den in Fig. 2 dargestellten Rippen 10a zum Verdrehschutz versehen sein.

Prinzipiell ist der Einsatz einer Wickelfeder 10 zur Signalübertragung nicht notwendig, hierfür können auch andere Verfahren, beispielsweise kontaktlose Übertragungsverfahren eingesetzt werden.

Ebenfalls bekannt sind verschiedene Meßprinzipien, mit denen ein Verdrehwinkel zwischen einem Magnetring 5 und einem Sensor 6 ermittelt bzw. erfaßt werden kann, so daß hierauf, insbesondere weil das Meßprinzip für das erfindungsgemäße Verfahren keine größere Bedeutung hat, nicht näher eingegangen wird.

Eine besonders vorteilhafte Ausführung des Verfahrens sieht vor, daß in einem ersten Verfahrensschritt die Verformstempel 8 und die Bohrungen 12 aufeinander ausgerichtet werden. Somit ist sichergestellt, daß die Verformstempel 8 bzw. die Bohrungen 12 richtig zueinander ausgerichtet sind. Ein späteres gegenseitiges Ausrichten, insbesondere wenn die Drehmoment-Meßeinrichtung 4 bereits positioniert ist, wird somit vermieden und folglich ein unbeabsichtigtes Verschieben der Drehmoment-Meßeinrichtung 4 verhindert.

Die Verformstempel 8 fahren daher zuerst, ohne daß die Drehmoment-Meßeinrichtung 4 angeordnet ist, in Richtung auf die Eingangswelle 2 bzw. die Ausgangswelle 3 vor, werden auf die Bohrungen 12 ausgerichtet und fahren anschließend wieder zurück.

In einem zweiten Verfahrensschritt wird das Halteblech 9 mit dem Sensor 6 auf die Ausgangswelle 3 aufgebracht und durch die Verformstempel 8 in die Bohrungen 12 der Ausgangswelle 3 lokal eingeformt. Dadurch, daß es sich bei dem Halteblech 9 um ein rundes Teil ohne vorherigen Formschluß handelt, kann dieses in einfacher Weise auf die Ausgangswelle 3 aufgebracht werden. Eine hundertprozentige exakte Positionierung ist dabei nicht zwingend erforderlich.

Selbstverständlich kann der Sensor 6 in der beschriebenen Weise auch auf der Eingangswelle 2 aufgebracht werden. In einer weiteren alternativen Ausführungsform, bei der selbstverständlich die noch folgenden Verfahrensschritte entsprechend angepaßt werden müssen, kann auch vorgesehen sein, daß zuerst der Magnetring 5 mit seinem zylindrischen Blechring 7 auf der Eingangswelle 2 bzw. der Ausgangswelle 3 befestigt und anschließend der Sensor 6 zu dem Magnetring 5 positioniert und befestigt wird.

In einem dritten Verfahrensschritt werden die Verformstempel 8 dann auf die noch nicht belegten bzw. noch freien Aufnahmepunkte angesetzt. Dies verläuft prinzipiell analog zu dem bereits beschriebenen ersten Verfahrensschritt. Hierzu können, je nach Ausführungsform, entweder die gleichen Verformstempel 8 oder eine andere Einheit von Verformstempel 8 verwendet werden.

In einem vierten Verfahrensschritt wird nach der Befestigung des Sensors 6 der zylindrische Blechring 7 mit dem Magnetring 5 auf die Eingangswelle 2 aufgebracht und zu dem im zweiten Verfahrensschritt fixierten Sensor 6 eingestellt bzw. positioniert.

In einem fünften Verfahrensschritt wird der im vierten Verfahrensschritt positionierte zylindrische Blechring 7 mit dem Magnetring 5 durch die Verformstempel 8 in die Bohrungen 12 der Eingangswelle 2 eingeformt. Nach dem Einformungsprozeß können die Verformstempel 8 wieder zurückgezogen werden.

Durch die verfahrensgemäße Befestigung entsteht eine dauerhafte, prozeßsichere Verbindung der Drehmoment-Meßeinrichtung 4 mit der Eingangswelle 2 bzw. der Ausgangswelle 3. Das erfindungsgemäße Verfahren ist für gängige Werkstoffe in diesem Bereich einsetzbar, insbesondere für Stahlblech, für Messingblech und VA-Blech. Der Einsatz der Werkstoffe Messingblech bzw. VA-Blech hat aufgrund der Korrosionsbeständigkeit besondere Vorteile.

Durch das beschriebene Verfahren können auch Magnete auf einer Schnecke befestigt werden. Hier dient der Magnet dann zur Drehzahlerkennung eines Motors und muß nicht eingestellt werden.

**Bezugszeichen**

| | |
|---|---|
| 1 | Teil eines Lenksystems |
| 2 | Eingangswelle |
| 3 | Ausgangswelle |
| 4 | Drehmoment-Meßeinrichtung |
| 5 | Magnetring |
| 6 | Sensor |
| 7 | zylindrischer Blechring |
| 8 | Verformelement |
| 9 | Halteblech |
| 10 | Wickelfeder |
| 10a | Rippen zum Verdrehschutz |
| 11 | Drehstab |
| 12 | Aufnahmepunkte/Bohrungen |
| 13 | Schnecke |
| 14 | Lager |
| 15 | Verbindungsstift |

## Patentansprüche

1. Verfahren zur Befestigung einer Drehmoment-Meßeinrichtung zur Erfassung eines Relativmomentes zwischen einer Eingangswelle und einer Ausgangswelle eines Lenksystems, insbesondere einer Zahnstangen-Hilfskraftlenkung,
**dadurch gekennzeichnet, dass** die Drehmoment-Meßeinrichtung (4) mittels eines Verformstempels (8) lokal in die Eingangswelle (2) und/oder die Ausgangswelle (3) eingeformt wird.

2. Verfahren nach Anspruch 1,
**dadurch gekennzeichnet, dass** die Drehmoment-Meßeinrichtung (4) einen Magnetring (5) und einen Sensor (6) aufweist, die durch die Verformelemente (8) in die Eingangswelle (2) bzw. die Ausgangswelle (3) eingeformt werden.

3. Verfahren nach Anspruch 2,
**dadurch gekennzeichnet, dass** der Magnetring (5) an einem zylindrischen Blechring (7) angeordnet ist und der zylindrische Blechring (7) mittels der Verformelemente (8) in die Eingangswelle (2) eingeformt wird.

4. Verfahren nach Anspruch 2 oder 3,
**dadurch gekennzeichnet, dass** der Sensor (6) auf einem Halteblech (9) mit Wickelfeder (10) angeordnet ist und das Halteblech (9) mittels der Verformelemente (8) in die Ausgangswelle (3) eingeformt wird.

5. Verfahren nach einem der Ansprüche 1 bis 4,
**dadurch gekennzeichnet, dass** die Eingangswelle (2) und/oder die Ausgangswelle (3) mit Aufnahmepunkten (12) zur Aufnahme des lokal einzuformenden Materials der Drehmoment-Meßeinrichtung (4) versehen wird.

6. Verfahren nach Anspruch 5,
**dadurch gekennzeichnet, dass** die Aufnahmepunkte (12) als Vertiefungen, Senkungen, Bohrungen oder dergleichen ausgebildet werden.

7. Verfahren nach Anspruch 5 oder 6,
**dadurch gekennzeichnet, dass** in einem ersten Verfahrensschritt die Verformelemente (8) und die Aufnahmepunkte (12) aufeinander ausgerichtet werden.

8. Verfahren nach Anspruch 7,
**dadurch gekennzeichnet, dass** in einem zweiten Verfahrensschritt der Blechring (7) mit dem Magnetring (5) oder das Halteblech (9) mit dem Sensor (6) durch die Verformelemente (8) in die Aufnahmepunkte (12) der Eingangswelle (2) oder die Aufnahmepunkte (12) der Ausgangswelle (3) eingeformt wird.

9. Verfahren nach Anspruch 6 oder 7,
**dadurch gekennzeichnet, dass** in einem dritten Verfahrensschritt die Verformelemente (8) auf die noch unbelegten Aufnahmepunkte (12) ausgerichtet werden.

10. Verfahren nach Anspruch 8 oder 9,
**dadurch gekennzeichnet, dass** in einem vierten Verfahrensschritt der Blechring (7) mit dem Magnetring (5) oder das Halteblech (9) mit dem Sensor (6) auf die Eingangswelle (2) oder die Ausgangswelle (3) aufgebracht und zu dem im zweiten Verfahrensschritt fixierten Magnetring (5) oder dem fixierten Sensor (6) eingestellt bzw. positioniert wird.

11. Verfahren nach einem der Ansprüche 7 bis 10,
**dadurch gekennzeichnet, dass** in einem fünften Verfahrensschritt der im vierten Verfahrensschritt positionierte Blechring (7) mit dem Magnetring (5) oder das Halteblech (9) mit dem Sensor (6) durch die Verformelemente (8) in die Aufnahmepunkte (12) der Eingangswelle (2) oder der Ausgangswelle (3) eingeformt wird.

12. Verfahren nach einem der Ansprüche 1 bis 11,
**dadurch gekennzeichnet, dass** die Drehmoment-Meßeinrichtung (4) durch einen Tiefziehprozeß eingeformt wird.

13. Verfahren nach einem der Ansprüche 1 bis 12,
**dadurch gekennzeichnet, dass** zur Einformung drei als Verformstempel (8) ausgebildete Verformelemente vorgesehen werden.

14. Verfahren nach Anspruch 13,
**dadurch gekennzeichnet, dass** die Anzahl und die Position der Aufnahmepunkte (12) und der Verformstempel (8) aneinander angepaßt ist.

15. Verfahren nach einem der Ansprüche 1 bis 14,
**dadurch gekennzeichnet, dass** die Einformung der Drehmoment-Meßeinrichtung (4) durch eine Kraft-Wegeüberwachung kontrolliert wird.

16. Eingangswelle und/oder Ausgangswelle zur Ausführung des Verfahrens gemäß einem der Ansprüche 1 bis 15,
**dadurch gekennzeichnet, dass** die Eingangswelle (2) und/oder Ausgangswelle (3) Aufnahmepunkte (12) zur Aufnahme des einzuformenden Materials der Drehmoment-Meßeinrichtung (4) aufweist.

17. Eingangswelle und/oder Ausgangswelle nach Anspruch 16,
**dadurch gekennzeichnet, dass** die Aufnahmepunkte (12) als Senkung, Vertiefung, Bohrung oder dergleichen ausgebildet sind.

18. Eingangswelle und/oder Ausgangswelle nach Anspruch 17,
**dadurch gekennzeichnet, dass** drei je um 120° versetzte zylindrische Bohrungen (12) mit Senkungen vorgesehen sind.

19. Eingangswelle und/oder Ausgangswelle nach Anspruch 17 oder 18,
**dadurch gekennzeichnet, dass** der Bohrungsdurchmesser 1 bis 4 mm, vorzugsweise 2 bis 3 mm, die Bohrungstiefe 1 bis 3 mm, vorzugsweise 1,5 bis 2 mm, die Senkung 45° und die Senkungstiefe vorzugsweise 0,5 mm bis 1 mm aufweist.

## Claims

1. Method for fastening a torque measurement device for detecting a relative torque between an input shaft and an output shaft of a steering system, in particular of a rack-and-pinion power-assisted steering system, **characterized in that** the torque measurement device (4) is integrally formed locally into the input shaft (2) and/or the output shaft (3) by means of a deformation ram (8).

2. Method according to Claim 1, **characterized in that** the torque measurement device (4) has a magnetic ring (5) and a sensor (6) which are integrally formed into the input shaft (2) or the output shaft (3) by means of the deformation elements (8).

3. Method according to Claim 2, **characterized in that** the magnetic ring (5) is arranged on a cylindrical sheet-metal ring (7) and the cylindrical sheet-metal ring (7) is integrally formed into the input shaft (2) by means of the deformation elements (8).

4. Method according to Claim 2 or 3, **characterized in that** the sensor (6) is arranged on a holding plate (9) by means of a spiral spring (10) and the holding plate (9) is integrally formed into the output shaft (3) by means of the deformation elements (8).

5. Method according to one of Claims 1 to 4, **characterized in that** the input shaft (2) and/or the output shaft (3) are/is provided with reception points (12) for receiving the material of the torque measurement device (4) to be integrally formed locally.

6. Method according to Claim 5, **characterized in that** the reception points (12) are designed as depressions, countersinks, bores or the like.

7. Method according to Claim 5 or 6, **characterized in that**, in a first method step, the deformation elements (8) and the reception points (12) are aligned with one another.

8. Method according to Claim 7, **characterized in that**, in a second method step, the sheet-metal ring (7) together with the magnetic ring (5) or the holding plate (9) together with the sensor (6) is integrally formed into the reception points (12) of the input shaft (2) or the reception points (12) of the output shaft (3) by means of the deformation elements (8).

9. Method according to Claim 6 or 7, **characterized in that**, in a third method step, the deformation elements (8) are aligned with the still unoccupied reception points (12).

10. Method according to Claim 8 or 9, **characterized in that**, in a fourth method step, the sheet-metal ring (7) together with the magnetic ring (5) or the holding plate (9) together with the sensor (6) is applied to the input shaft (2) or the output shaft (3) and is set or positioned in relation to the magnetic ring (5) or to the sensor (6) fixed in the second method step.

11. Method according to one of Claims 7 to 10, **characterized in that**, in a fifth method step, the sheet-metal ring (7) together with the magnetic ring (5) or the holding plate (9) together with the sensor (6), positioned in the fourth method step, is integrally formed into the reception points (12) of the input shaft (2) or of the output shaft (3) by means of the deformation elements (8).

12. Method according to one of Claims 1 to 11, **characterized in that** the torque measurement device (4) is integrally formed by means of a deep-drawing process.

13. Method according to one of Claims 1 to 12, **characterized in that**, for integral forming, three deformation elements designed as deformation rams (8) are provided.

14. Method according to Claim 13, **characterized in that** the number and position of the reception points (12) and of the deformation rams (8) are adapted to one another.

15. Method according to one of Claims 1 to 14, **characterized in that** integral forming of the torque measurement device (4) is checked by means of force/path monitoring.

16. Input shaft and/or output shaft for carrying out the method according to one of Claims 1 to 15, **characterized in that** the input shaft (2) and/or output shaft (3) have/has reception points (12) for receiving the material of the torque measurement device (4) which is to be integrally formed.

17. Input shaft and/or output shaft according to Claim 16, **characterized in that** the reception points (12) are designed as a countersink, depression, bore or the like.

18. Input shaft and/or output shaft according to Claim 17, **characterized in that** three cylindrical bores (12) offset in each case at 120° and having countersinks are provided.

19. Input shaft and/or output shaft according to Claim 17 or 18, **characterized in that** the bore diameter is 1 to 4 mm, preferably 2 to 3 mm, the bore depth is 1 to 3 mm, preferably 1.5 to 2 mm, the countersink is at 45° and the countersink depth is preferably 0.5 mm to 1 mm.

## Revendications

1. Procédé pour fixer un dispositif de mesure de couple de rotation pour la détection d'un couple relatif entre un arbre d'entrée et un arbre de sortie d'un système de direction, en particulier d'une direction assistée à crémaillère, **caractérisé en ce que** l'on enfonce le dispositif de mesure de couple de rotation (4) localement dans l'arbre d'entrée (2) et/ou dans l'arbre de sortie (3) au moyen d'un poinçon de déformation (8).

2. Procédé selon la revendication 1, **caractérisé en ce que** le dispositif de mesure de couple de rotation (4) comporte un anneau magnétique (5) et un capteur (6) qui sont enfoncés dans l'arbre d'entrée (2) ou l'arbre de sortie (3) par les éléments de déformation (8).

3. Procédé selon la revendication 2, **caractérisé en ce que** l'anneau magnétique (5) est disposé sur un anneau de tôle cylindrique (7) et l'anneau de tôle cylindrique (7) est enfoncé dans l'arbre d'entrée (2) au moyen des éléments de déformation (8).

4. Procédé selon la revendication 2 ou 3, **caractérisé en ce que** le capteur (6) est disposé sur une tôle de support (9) avec un ressort spiral (10) et la tôle de support (9) est enfoncée dans l'arbre de sortie (3) au moyen des éléments de déformation (8).

5. Procédé selon l'une quelconque des revendications 1 à 4, **caractérisé en ce que** l'arbre d'entrée (2) et/ou l'arbre de sortie (3) sont munis de points de réception (12) pour la réception du matériau à enfoncer localement du dispositif de mesure de couple de rotation (4).

6. Procédé selon la revendication 5, **caractérisé en ce que** les points de réception (12) sont réalisés sous forme de creux, de dépressions, de perçages ou analogues.

7. Procédé selon la revendication 5 ou 6, **caractérisé en ce que** les éléments de déformation (8) et les points de réception (12) sont, dans une première étape de procédé, alignés les uns avec les autres.

8. Procédé selon la revendication 7, **caractérisé en ce que**, dans une deuxième étape de procédé, on enfonce l'anneau de tôle (7) avec l'anneau magnétique (5) ou la tôle de support (9) avec le capteur (6) au moyen des éléments de déformation (8) dans les points de réception (12) de l'arbre d'entrée (2) ou dans les points de réception (12) de l'arbre de sortie (3).

9. Procédé selon la revendication 6 ou 7, **caractérisé en ce que**, dans une troisième étape de procédé, on aligne les éléments de déformation (8) avec les points de réception (12) qui ne sont pas encore occupés.

10. Procédé selon la revendication 8 ou 9, **caractérisé en ce que**, dans une quatrième étape de procédé, on place l'anneau de tôle (7) avec l'anneau magnétique (5) ou la tôle de support (9) avec le capteur (6) sur l'arbre d'entrée (2) ou sur l'arbre de sortie (3) et on les règle ou on le positionne par rapport à l'anneau magnétique (5) fixé ou au capteur (6) fixé dans la deuxième étape de procédé.

11. Procédé selon l'une quelconque des revendications 7 à 10, **caractérisé en ce que**, dans une cinquième étape de procédé, on enfonce l'anneau de tôle (7) avec l'anneau magnétique (5) ou la tôle de support (9) avec le capteur (6) positionné(e) dans la quatrième étape du procédé au moyen des éléments de déformation (8) dans les points de réception (12) de l'arbre d'entrée (2) ou de l'arbre de sortie (3).

12. Procédé selon l'une quelconque des revendications 1 à 11, **caractérisé en ce que** l'on enfonce le dispositif de mesure de couple de rotation (4) par un procédé d'emboutissage profond.

13. Procédé selon l'une quelconque des revendications 1 à 12, **caractérisé en ce qu'**il est prévu, pour l'enfoncement, trois éléments de déformation réalisés en forme de poinçons de déformation (8).

14. Procédé selon la revendication 13, **caractérisé en ce que** le nombre et la position des points de réception (12) et des poinçons de déformation (8) sont adaptés les uns aux autres.

15. Procédé selon l'une quelconque des revendications 1 à 14, **caractérisé en ce que** l'on contrôle l'enfoncement du dispositif de mesure de couple de rotation (4) par une surveillance de la force et de la course.

16. Arbre d'entrée et/ou arbre de sortie pour la mise en oeuvre du procédé selon l'une quelconque des revendications 1 à 15, **caractérisé en ce que** l'arbre d'entrée (2) et/ou l'arbre de sortie (3) présente des points de réception (12) pour recevoir le matériau à enfoncer du dispositif de mesure de couple de rotation (4).

17. Arbre d'entrée et/ou arbre de sortie selon la revendication 16, **caractérisé en ce que** les points de réception (12) sont réalisés sous forme de dépression, de creux, de perçage ou analogues.

18. Arbre d'entrée et/ou arbre de sortie selon la revendication 17, **caractérisé en ce qu'**il est prévu trois perçages cylindriques décalés respectivement de 120° avec des dépressions.

19. Arbre d'entrée et/ou arbre de sortie selon la revendication 17 ou 18, **caractérisé en ce que** le diamètre des perçages vaut 1 à 4 mm, de préférence 2 à 3 mm, la profondeur de perçage 1 à 3 mm, de préférence 1,5 à 2 mm, la dépression 45° et la profondeur de dépression de préférence 0,5 mm à 1 mm.
